# EUROPÄISCHE PATENTSCHRIFT

(11) **EP 0 766 065 B1**
(45) Veröffentlichungstag und Bekanntmachung des Hinweises auf die Patenterteilung: **24.04.2002**
(21) Anmeldenummer: 96114201.5
(22) Anmeldetag: 05.09.1996
(51) Int. Cl.: G01C 19/30, G01C 21/18

(54) **Drehmomenterzeuger-Anordnung**
Torquer arrangement
Arrangement générateur de couple

(30) Priorität: 27.09.1995 DE 19535905
(43) Veröffentlichungstag der Anmeldung: 02.04.1997
(73) Patentinhaber: Bodenseewerk Gerätetechnik GmbH, 88662 Überlingen (DE)
(72) Erfinder: Kempas, Hagen, 88662 Überlingen (DE)
(74) Vertreter: Weisse, Jürgen, Dipl.-Phys.

(56) Entgegenhaltungen:
- EP-A- 0 444 445
- WO-A-85/00055
- WO-A-88/05996

## Beschreibung

Die Erfindung betrifft eine Drehmomenterzeuger-Anordnung nach dem Oberbegriff des Anspruch 1.

Der Begriff "Plattform" soll dabei jeden Teil bezeichnen, der durch eine Drehmomenterzeuger-Anordnung ausrichtbar ist. Die Drehmomenterzeuger-Anordnung kann dabei von einer Inertialsensor-Einheit angesteuert werden, um die Plattform im Raum zu stabilisieren. Die Plattform kann ein Sucher für einen zielsuchenden Flugkörper sein, wobei der Sucher über eine Inertialsensor-Einheit und die Drehmomenterzeuger-Anordnung von den Bewegungen des Flugkörpers entkoppelt ist. Die Drehmomenterzeuger-Anordnung ist aber nicht auf diese Anwendung beschränkt.

Üblicherweise ist eine Plattform in Kardanrahmen gelagert. Drehmomenterzeuger sitzen auf den Kardanachsen und wirken der Struktur und dem äußeren Kardanrahmen bzw. zwischen den Kardanrahmen jeweils um eine Kardanachse. Die Plattform bildet den inneren Kardanrahmen.

Die bekannten Drehmomenterzeuger-Anordnungen sind aufwendig und sperrig und in vielen Fällen, z.B. bei Suchköpfen für zielverfolgende Flugkörper, kaum anwendbar.

Durch die WO 88 05996 A ist eine solche Drehmomenterzeuger-Anordnung nach dem Oberbegriff des Anspruch 1 bekannt. Die dort verwendeten Spulen sind in einer pfannkuchenartigen Form gewickelt und verlaufen vollständig innerhalb des Luftspalts der Polschuhe. Die hier beschriebene Anordnung läßt nur eine sehr beschränkte Bewegung der Plattform zu.

Der Erfindung liegt die Aufgabe zugrunde, eine einfache und raumsparende Drehmomenterzeuger-Anordnung zu schaffen.

Erfindungsgemäß wird diese Aufgabe durch die in dem kennzeichnenden Teil des Anspruchs 1 aufgeführten Merkmale gelöst.

Nach der Erfindung greift die Drehmomenterzeuger-Anordnung nicht über die Kardanachsen sondern unmittelbar an der Plattform an. Ein diametral gegenüberliegendes Paar von Spulen definiert eine plattformfeste X-Achse, das dazu um 90° winkelversetzte Paar von Spulen definiert eine dazu senkrechte plattformfeste Y-Achse. Die X-Achse und die Y-Achse schneiden sich in dem Schwenkpunkt der Plattform. Die auf der X-Achse sitzenden Spulen bilden mit den zugehörigen magnetischen Kreisen einen um die Y-Achse unmittelbar auf die Plattform wirkenden Drehmomenterzeuger. In gleicher Weise bilden die auf der Y-Achse sitzenden Spulen mit den zugehörigen magnetischen Kreisen einen um die X-Achse ebenfalls unmittelbar auf die Plattform wirkenden Drehmomenterzeuger. Der Schwenkpunkt ist unabhängig von der Drehmomenterzeuger-Anordnung z.B. durch eine kardanische Lagerung der Plattform bestimmt. Diese Lagerung kann eine raumsparende Innenkardan-Lagerung sein. Wenn ein Strom durch eine Spule fließt, erzeugt dieser Strom eine Kraft senkrecht zu dem in Umfangsrichtung der Plattform fließenden Strom und zu der radialen Richtung des Magnetfeldes. Diese Kraft erzeugt das Drehmoment um den Schwenkpunkt. Auch wenn die Plattform z.B. um die X-Achse verschwenkt ist, befindet sich ein Teil der Spule des um die Y-Achse wirksamen Drehmomenterzeugers in dem Luftspalt des zugehörigen magnetischen Kreises Weitere Ausgestaltungen der Erfindung sind Gegenstand der Unteransprüche 2 bis 4.

Ein Ausführungsbeispiel der Erfindung ist nachstehend unter Bezugnahme auf die zugehörigen Zeichnungen näher erläutert.
- Fig.1: ist eine Seitenansicht einer Drehmomenterzeuger-Anordnung, bei welcher die von den Drehmomenten zu beaufschlagende Plattform in einer Mittelstellung ist.
- Fig.2: zeigt einen Längsschnitt durch die in der Mittelstellung befindliche Drehmomenterzeuger-Anordnung von Fig.1.
- Fig.3: ist eine perspektivische Darstellung der Drehmomenterzeuger-Anordnung von Fig.1 und 2.

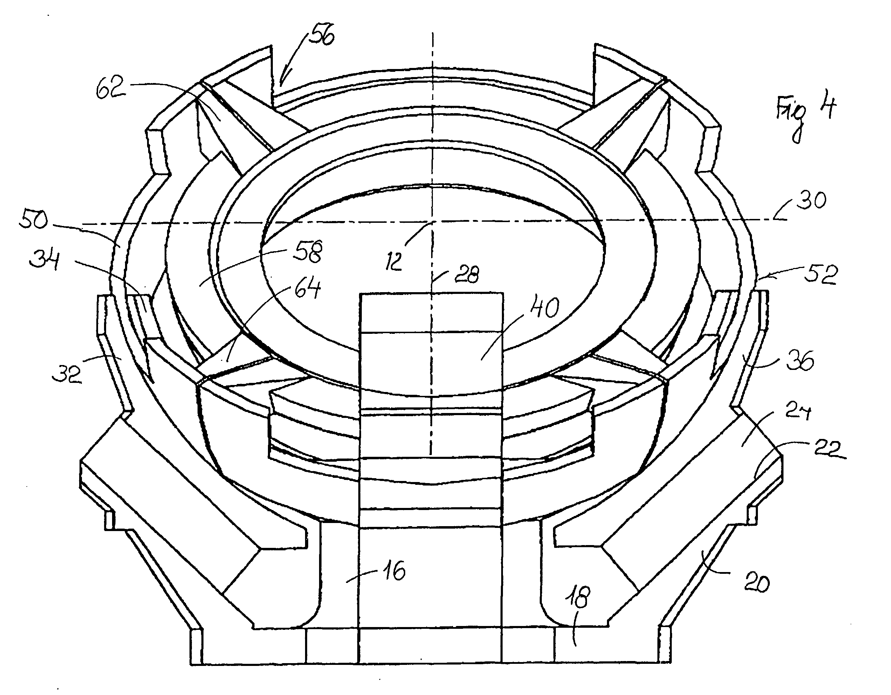

- Fig.4: ist eine Seitenansicht einer Drehmomenterzeuger-Anordnung ähnlich Fig.1, bei welcher die Plattform um 40° um die Y-Achse ausgelenkt ist.
- Fig.5: zeigt einen Längsschnitt ähnlich Fig.2 der um 40° um die Y-Achse ausgelenkten Drehmomenterzeuger-Anordnung von Fig.4.
- Fig.6: ist eine perspektivische Darstellung der Drehmomenterzeuger-Anordnung von Fig.4 und 5.
- Fig.7: ist eine Seitenansicht einer Drehmomenterzeuger-Anordnung ähnlich Fig.1 oder 4 bei welcher die von den Drehmomenten zu beaufschlagende Plattform in um Y-Achse und X-Achse jeweils um 40°*sin 45° ausgelenkt ist.
- Fig.8: zeigt einen Längsschnitt durch die ausgelenkte Drehmomenterzeuger-Anordnung von Fig.7.
- Fig.9: ist eine perspektivische Darstellung der Drehmomenterzeuger-Anordnung von Fig.7 und 8.
- Fig.10: ist eine schematische Darstellung der Plattform allein in einer Seitenansicht und veranschaulicht die geometrischen Verhältnisse.
- Fig.11: ist eine schematische Darstellung ähnlich Fig.1 und veranschaulicht die Bewegung eines auf der X-Achse liegenden peripheren Punktes, z.B. eines Punktes einer symmetrisch zur X-Achse liegenden Spule, wenn die Plattform bei maximaler positiver oder negativer Neigung um die X-Achse zusätzlich um die Y-Achse zwischen den Maximalwinkeln verschwenkt wird und an einem zweiachsigen Kardangelenk aufgehängt ist.
- Fig.12: ist eine zugehörige perspektivische Darstellung.

In den Figuren ist mit 10 eine Plattform bezeichnet. Die Plattform 10 ist in nicht dargestellter Weise mittels einer Innenkardan-Lagerung um einen zentralen Schwenkpunkt 12 allseitig schwenkbar gelagert. Ein Stator 14 einer Drehmomenterzeuger-Anordnung ist zu dem Schwenkpunkt 12 ausgerichtet. Der Stator 14 weist einen rohrförmigen Mittelteil 16 aus magnetisierbarem Material auf. An dem rohrförmigen Mittelteil 16 sind an dessen der Plattform 10 abgewandten Ende vier radiale Flanschteile 18 vorgesehen, die jeweils um 90° gegeneinander versetzt sind. An den Flanschteilen 18 sind im wesentlichen tangential zu dem Schwenkpunkt 12 sich erstreckende Magnetträger 20 mit planen Auflageflächen 22 angeformt. Plattenförmige Dauermagnete 24 sitzen mit ihrer Unterseite auf den Magnetträgern 20. Die Dauermagnete 24 sind senkrecht zu der Auflagefläche 22 der Magnetträger 20 magnetisiert. Die Dauermagnete 24 erzeugen somit ein zu dem Schwenkpunkt 12 im wesentlichen radiales Magnetfeld.

An dem Stator 14 sind vier Paare von Polschuhen vorgesehen ist, die um die durch den Schwenkpunkt 12 gehende Achse des Mittelteils 16 herum um 90° gegeneinander winkelversetzt angeordnet sind. Die Polschuhe fluchten winkelmäßig mit den Flanschteilen 18 und Magnetträgern 20. Die Polschuhe jedes Paares bilden zwischen sich einen Luftspalt, der von sphärischen Flächen begrenzt ist. Die sphärischen Flächen sind um den Schwenkpunkt 12 gekrümmt. Die äußeren Polschuhe jedes Paares sind jeweils auf der Oberseite eines der Dauermagnete 24 befestigt. Die inneren Polschuhe sind an den rohrförmigen Mittelteil 16 an dessen der Plattform 10 zugewandten Ende angeformt.

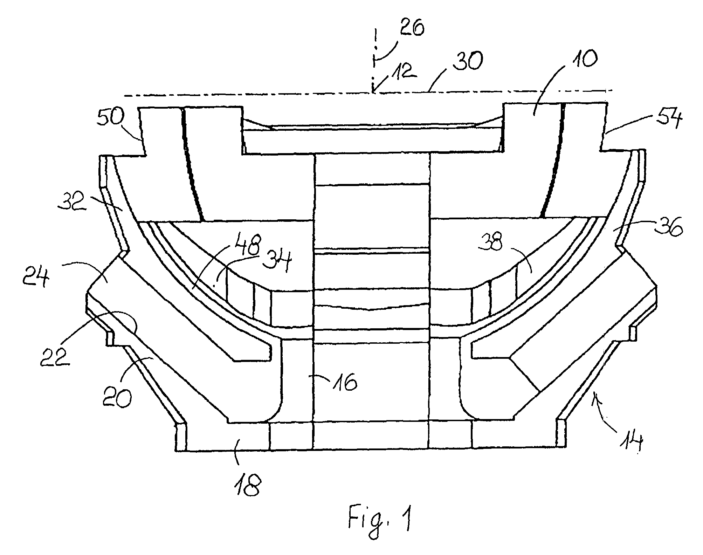

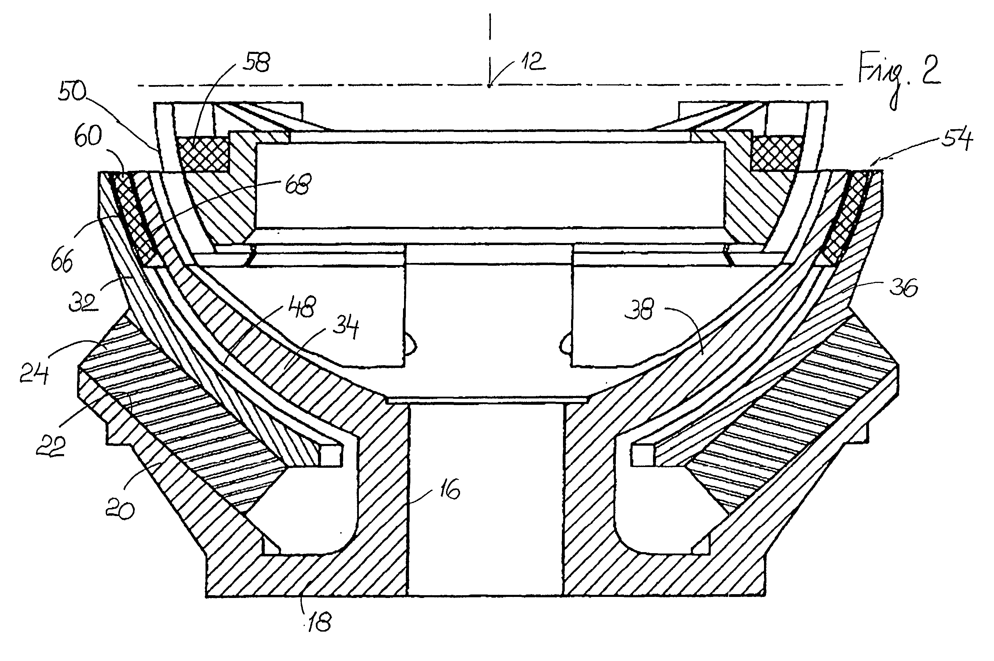

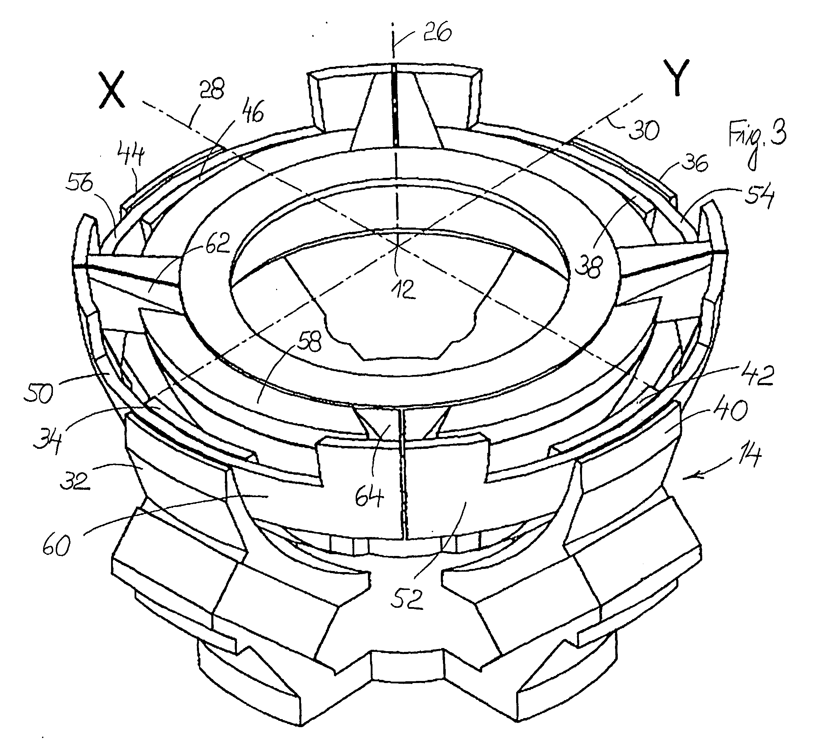

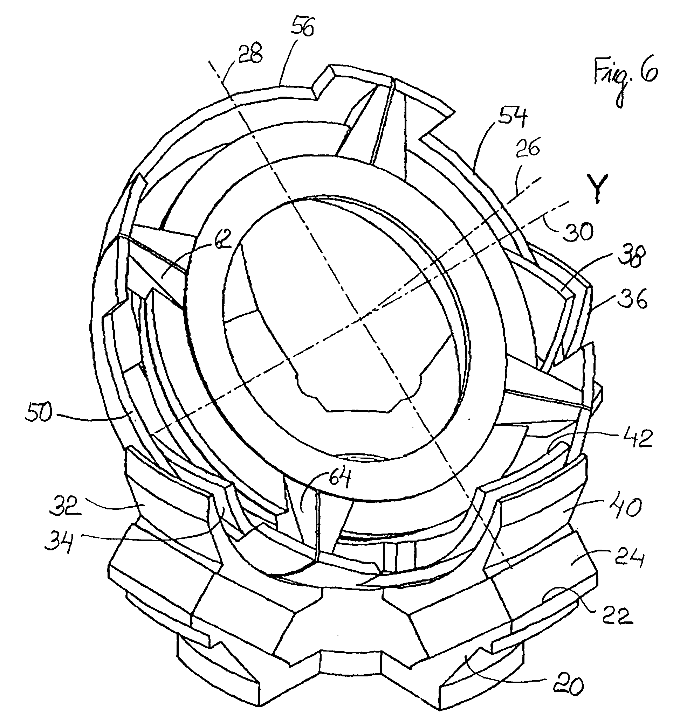

Wie aus Fig.3 und 6 am besten ersichtlich ist, ist ein plattformfestes Koordinatensystem mit einer zur Plattformebene senkrechten, in Fig.3 vertikalen Z-Achse 26 und den zu der Z-Achse 26 und zueinander senkrechten X- und Y-Achsen 28 bzw. 30 definiert. Der Koordinatenursprung liegt in dem Schwenkpunkt 12. Durch die X-Achse 28 und die Y-Achse 30 in Fig.3 gehen Vertikalebenen. Eine dieser Vertikalebenen ist die Papierebene in Fig.2. Die andere Vertikalebene verläuft senkrecht dazu durch die Z-Achse 26. Die Flanschteile, Magnetträger, Dauermagnete und Polschuhe sind symmetrisch zu diesen Vertikalebenen angeordnet. In Fig.1 und 2 sind zwei diametral einander gegenüberliegende Paare von Polschuhen 32 und 34 bzw. 36 und 38 erkennbar. In Fig.3 sieht man im Vordergrund das Paar von Polschuhen 32 und 34 und ein dazu um 90° winkelversetztes Paar von Polschuhen 40 und 42. Im Hintergrund sind die Enden der dazu jeweils diametral gegenüberliegenden Polschuhe 36 und 38 bzw. 44 und 46 erkennbar. Die Polschuhe 32, 36, 40 und 44 sind "äußere" Polschuhe, d.h. liegen weiter vom Schwenkpunkt 12 entfernt als die "inneren" Polschuhe 34, 38, 42 und 46. Zwischen den äußeren und inneren Polschuhen, z.B. 32 und 34, ist ein Luftspalt 48 gebildet. Der Luftspalt 48 ist von sphärischen, zu dem Schwenkpunkt 12 zentrierten Flächen begrenzt. Ein magnetischer Kreis verläuft von der einen, inneren Polfläche des Dauermagneten 24 über den äußeren Polschuh 32, den Luftspalt 48, den inneren Polschuh 34 den rohrförmigen Mittelteil 16, den Flanschteil 18 und den Magnetträger 20 zu der anderen, äußeren Polfläche des Dauermagneten 24. Dadurch wird in dem Luftspalt ein im wesentlichen radiales Magnetfeld erzeugt. Die magnetischen Kraftlinien verteilen sich dabei gleichmäßig über die Fläche des Luftspaltes. In entsprechender Weise sind die übrigen Paare von Polschuhen ausgebildet.

An der Plattform 10 sind vier jeweils um 90° gegeneinander versetzte Spulen 50, 52, 54 und 56 angebracht. Dabei liegen die Spulen 50 und 54 einander diametral gegenüber, und die Spulen 52 und 56 liegen einander diametral gegenüber. Die Spulen 50, 52, 54 und 56 sind bogenförmig. Es wird hier die Spule 50 beschrieben. Die übrigen Spulen sind damit übereinstimmend ausgebildet.

Die Spule 50 weist einen bogenförmigen Innenabschnitt 58 und einen ebenso bogenförmigen Außenabschnitt 60 auf. Innenabschnitt 58 und Außenabschnitt 60 sind durch kurze Endabschnitte 62 und 64 miteinander verbunden. Die Drähte verlaufen in dem Innenabschnitt 58 und dem Außenabschnitt 60 in Umfangsrichtung der Plattform 10. In den Endabschnitten 62 und 64 verlaufen die Drähte radial. Es werden so Windungen gebildet, die im wesentlichen parallel zu der Ebene der Plattform 10 oder zu einer senkrecht zur Papierebene in Fig.2 verlaufenden Ebene liegen. Der Außenabschnitt 60 ist von sphärischen, um den Schwenkpunkt 12 gekrümmten Flächen 66 und 68 begrenzt. Wie aus Fig.2 und 3 am besten ersichtlich ist, sind die Drähte der Windungen im Innenabschnitt 58 jeder Spule in mehreren Lagen so übereinandergewickelt, daß ein kompaktes Bündel entsteht. In den Endabschnitten 62 und 64 werden die Drähte auseinandergefächert. Die Außenabschnitten 60 sind flach mit einer oder wenigen Lagen von Windungen mit vergleichsweise großer axialer Ausdehnung, so daß die Außenabschnitte 60 in einen ziemlich schmalen Luftspalt 48 eingreifen können.

Die Spulen 50, 52, 54 und 56 grenzen mit ihren Endabschnitten aneinander an. Die Spulen 50, 52, 54 und 56 greifen um je einen der inneren Polschuhe 34, 42, 38 bzw. 46. Die jeweiligen Außenteile 60 sind in den Luftspalten 48 zwischen den äußeren Polschuhen und den inneren Polschuhen geführt, z.B. zwischen den Polschuhen 32 und 34 bzw. 36 und 38 in Fig.2.

Diametral einander gegenüberliegende Spulen und magnetische Kreise bilden jeweils einen um eine Achse wirksamen Drehmomenterzeuger. Die Spulen 50 und 54 bilden zusammen mit den über die Polschuhe 32 und 34 bzw. die Polschuhe 36 und 38 laufenden magnetischen Kreisen einen um die X-Achse 28 wirkenden Drehmomenterzeuger. Auf die Spulen wirken Kräfte, deren Richtung senkrecht zu der radialen Richtung des magnetischen Feldes und senkrecht zu dem in Umfangsrichtung durch die Spulen fließenden Strom, also tangential in durch die Achse des Mittelteiles 16 gehenden Längsebenen., etwa der Papierebene in Fig.2. In entsprechender Weise bilden die Spulen 52 und 56 mit den über die Polschuhe 40 und 42 bzw. die Polschuhe 44 und 46 laufenden magnetischen Kreisen einen um die Y-Achse wirkenden Drehmomenterzeuger. Die Drehmomenterzeuger werden durch Ströme angesteuert, die auf die Spulen aufgeschaltet sind. Die Drehmomenterzeuger greifen dabei über die Spulen unmittelbar an der Plattform 10 an, nicht an Achsen der kardanischen Lagerung der Plattform.

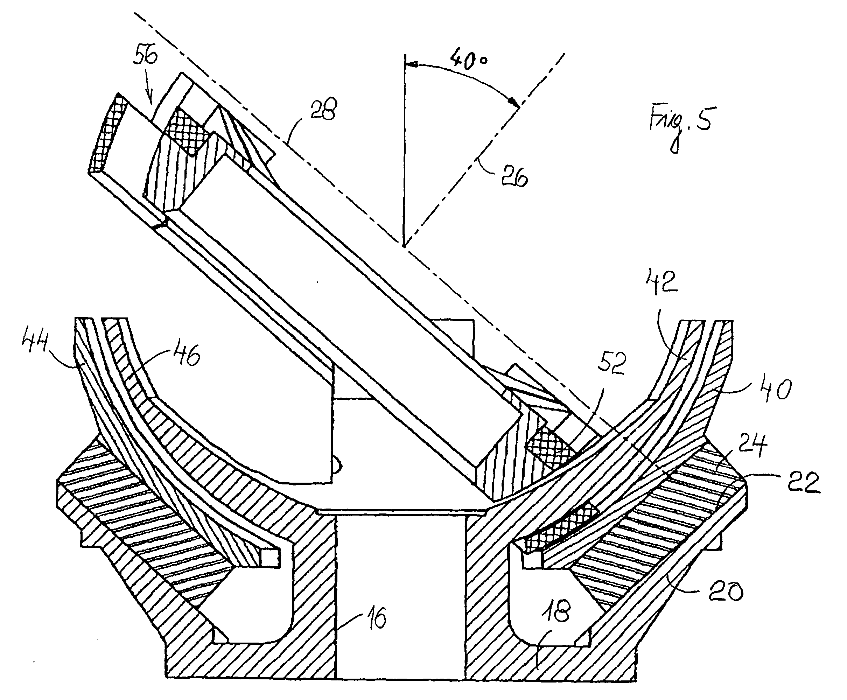

Wie aus Fig.5 am besten ersichtlich ist, kann die Plattform um die X-Achse bis zu einem Winkel von 40° verschwenkt werden. Der Außenabschnitt 60 der Spule 54 bleibt dabei innerhalb des Luftspaltes zwischen den Polschuhen 36 und 38. Das auf die Spule 54 bei einem vorgegebenen Strom durch die Spule 54 ausgeübte Drehmoment bleibt davon unbeeinflußt, da das Magnetfeld im gesamten Luftspalt das gleiche ist. Die Spule 50 ist bei dieser Stellung der Plattform vollständig aus dem Luftspalt 48 herausbewegt und leistet keinen Beitrag zu dem Drehmoment. In entsprechender, nicht dargestellter Weise kann die Plattform 10 aus der Lage von Fig.1 auch entgegen dem Uhrzeigersinn um 40° verschwenkt werden. Dabei wird die Spule 50 wirksam und die Spule 54 aus dem Luftspalt herausbewegt. Es steht somit insgesamt ein Schwenkwinkel von 80° zur Verfügung.

Bei einer solchen Verschwenkung der Plattform 10 nur um die X-Achse 28 werden die auf der X-Achse sitzenden Spulen 52 und 56 gegenüber den zugehörigen Polschuhen 40, 42 bzw. 44, 46 in dem Luftspalt verdreht. Da die Spulen, wie aus Fig.2 und 5 ersichtlich ist, im Abstand von der durch den Schwenkpunkt 12 gehenden X-Achse angeordnet sind, bewegen sie sich dabei auch translatorisch relativ zu den Polschuhen, wie aus Fig.6 am besten ersichtlich ist. Wegen der zum Schwenkpunkt 12 zentrierten sphärischen Form von Luftspalt und Außenabschnitt der Spule und der bogenförmigen Ausbildung der Spule ist das geometrisch möglich.

In gleicher Weise kann die Plattform um die Y-Achse verschwenkt werden. Dabei bleibt der von den Spulen 52 und 56 und den zugehörigen magnetischen Kreisen gebildete, um die Y-Achse wirksame Drehmomenterzeuger in gleicher Weise unabhängig vom Schwenkwinkel in Funktion.

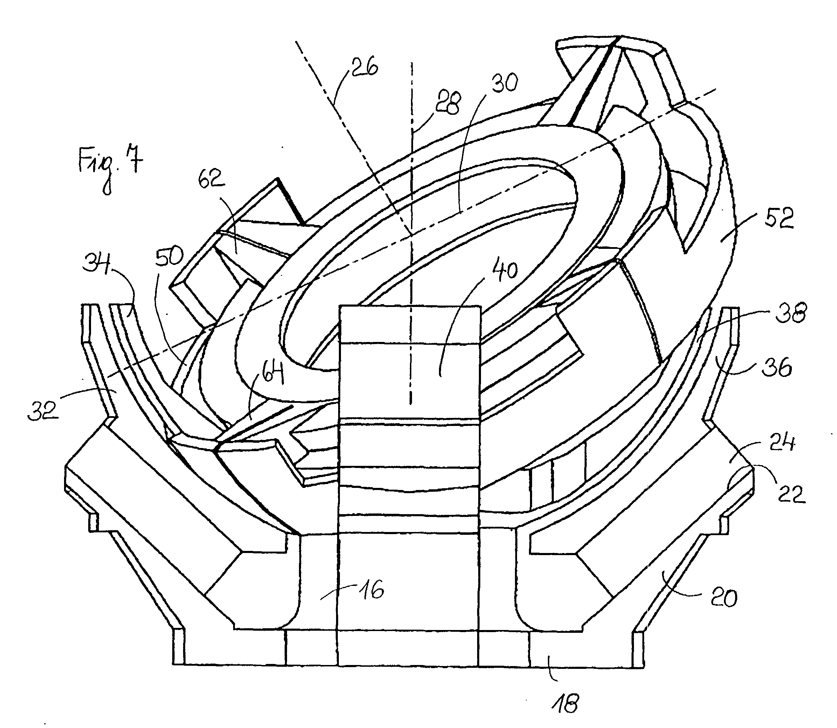

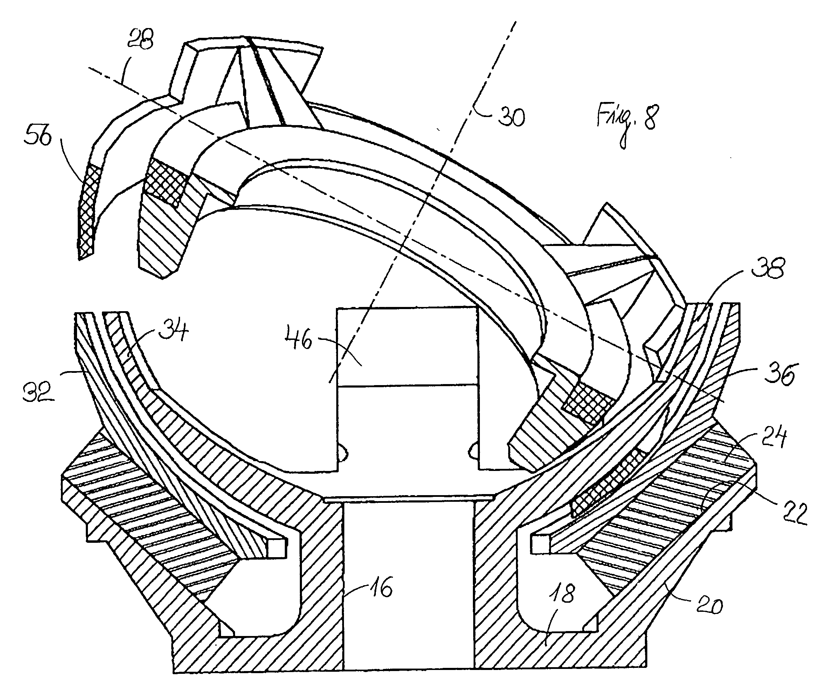

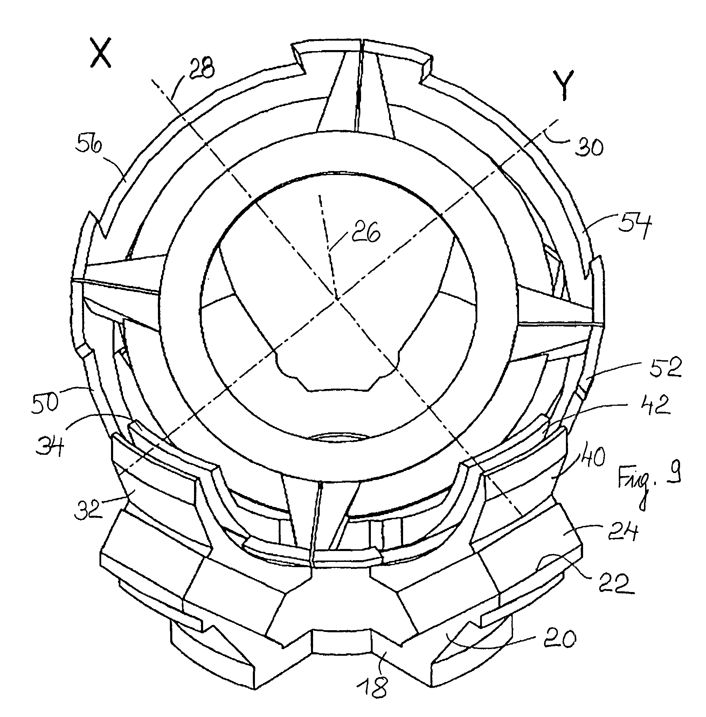

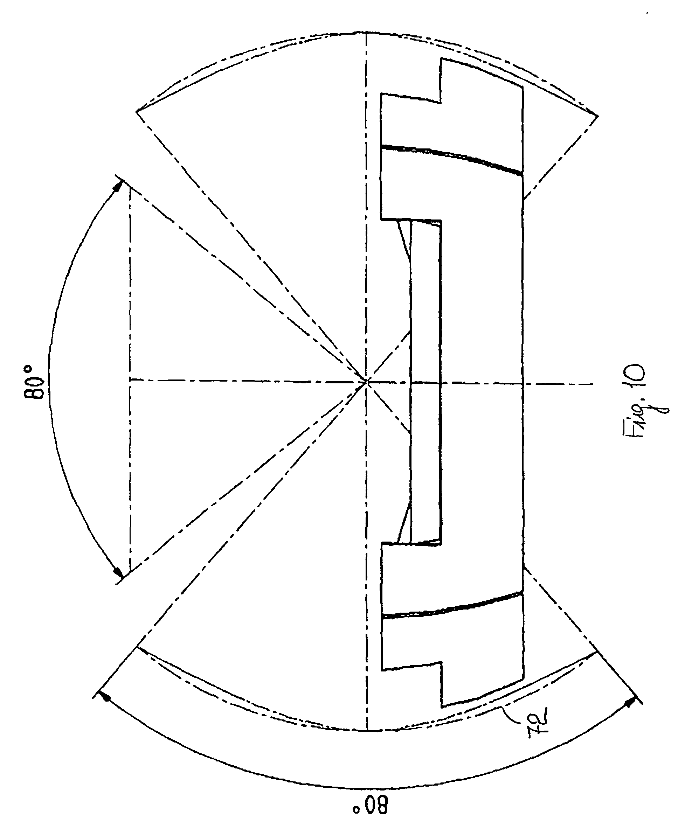

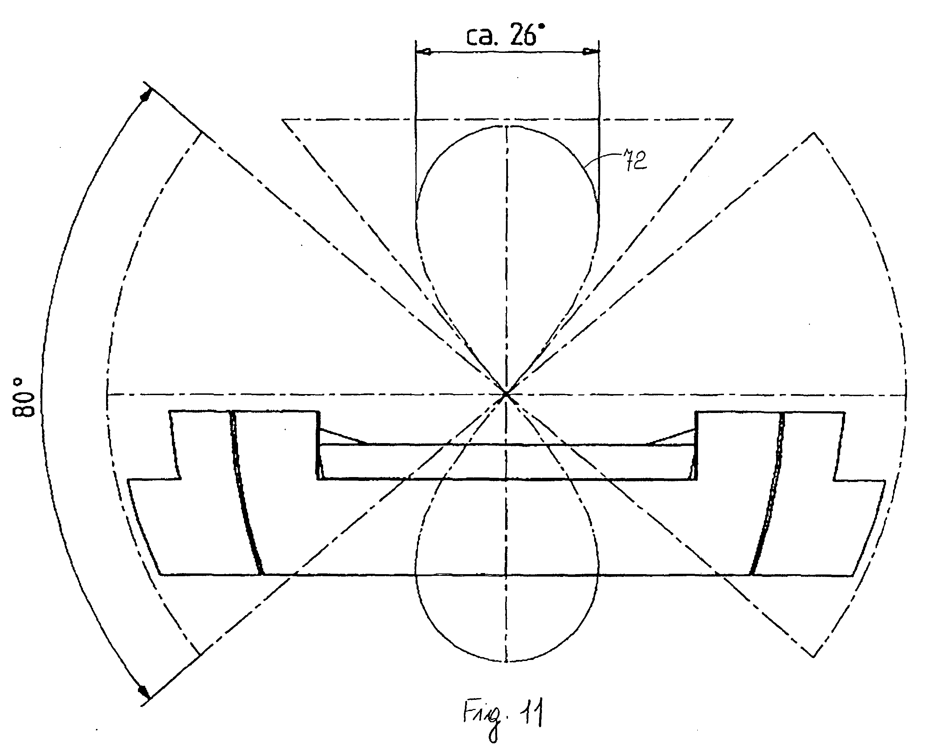

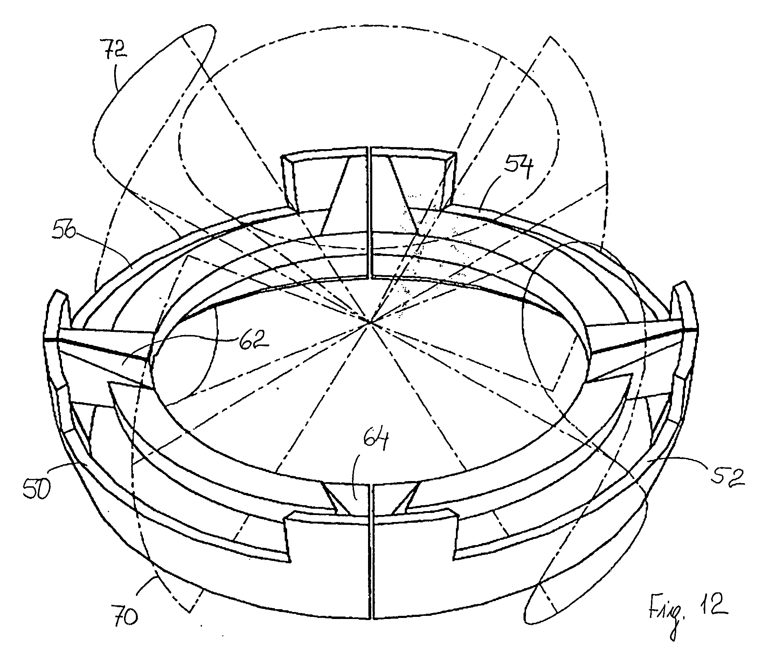

Wie aus den Figuren 7 bis 9 ersichtlich ist, kann die Plattform 10 ausgehend von der Lage von Fig.1 bis 3 auch gleichzeitig um die X-Achse 28 und um die Y-Achse 30 verschwenkt werden. Dabei tritt eine Translationsbewegung der Achsen gegenüber dem Stator 14 auf. Das ist in den Figuren 10 bis 12 veranschaulicht. Dabei zeigt Fig.10 den Stator 14 mit den Bewegungen der Koordinatenachsen in Seitenansicht in Richtung der Y-Achse von Fig 3 gesehen, Fig.11 zeigt den Stator mit den Bewegungen der Koordinatenachsen in Seitenansicht senkrecht zur Y-Achse gesehen. Fig.12 ist eine perspektivische Ansicht mit den Bewegungen der Koordinatenachsen.

Es wird angenommen, daß die Plattform 10 um die X-Achse 28 aus der Position von Fig.3 um 40° nach der einen oder der anderen Seite verschwenkt wurde. Das ist in Fig.11 durch den 80°-Winkel und in Fig.12 durch den Bogen 70 angedeutet. Das sind die beiden Endstellungen der Plattform 10 um die X-Achse 28. Die X-Achse behält dabei ihre Lage relativ zu dem Stator bei. Die Y-Achse beschreibt den Bogen 70. Wenn dann ausgehend von dieser Schrägstellung die X-Achse zwischen ihren beiden Extremstellungen um die schräggestellte Y-Achse bewegt wird, dann beschreibt die X-Achse eine "8", wobei die eine Hälfte der "8" der einen Endstellung der Plattform und die andere Hälfte der "8" der anderen Endstellung der Plattform um die X-Achse entspricht. Bei kleineren Schwenkwinkeln sind die "8"-Kurven entsprechend kleiner.

In Fig.10 bis 12 ist das für maximale Schwenkwinkel dargestellt. In Fig.11 ist die von der X-Achse beschriebene "8"-Kurve mit 72 bezeichnet. Wie aus Fig.10 und 12 ersichtlich ist, liegen die "8"-Kurven 72 auf sphärischen Flächen.

Solche Bewegungen führen auch die zu den Achsen der Plattform 10 ausgerichteten Spulen 50, 52, 54 und 56 aus. Durch die langgestreckt-bogenförmige Gestalt der Spulen 50, 52, 54 und 56 sind auch diese Bewegungen möglich.

Die vorstehend beschriebene zweiachsige Drehmomenterzeuger-Anordnung bietet wesentliche Vorteile:

Die Drehmomenterzeuger-Anordnung besitzt eine geringe Baugröße. Die Drehmomenterzeuger-Anordnung gestattet einen großen Schwenkbereich der Plattform 10. Die Drehmomente werden im wesentlichen stets im Achsensystem der Plattform 10 erzeugt.

Die Induktivität der Spulen 50, 52, 54 und 56 ist gering, so daß sich eine hohe Grenzfrequenz ergibt. Die Drehmomenterzeuger-Anordnung hat keine Ansprechschwelle, keine Reibung, keine Hysterese, keine Reluktanzmomente, eine geringe bewegliche Masse und eine kleine elektrische Zeitkonstante. Die Drehmomenterzeuger-Anordnung arbeitet daher bei der Anwendung zur Ausrichtung eines Suchers bei Flugkörpern auch bei hohen Rollraten und dem Auftreten von Schielwinkeln einwandfrei.

## Patentansprüche

1. Drehmomenterzeuger-Anordnung, welche zwei strukturfeste Drehmomenterzeuger aufweist, die um zwei zueinander senkrechte Achsen wirken und unmittelbar an der Plattform (10) angreifen, und durch welche auf eine Plattform (10), die um einen zentralen Schwenkpunkt (12) allseitig beweglich gelagert ist, Drehmomenten um zwei zueinander senkrechte Achsen (28,30) ausübbar sind, wobei
(a) ein Stator (14) mit vier Paaren von Polschuhen (32,34;36,38;40,42;44;46) vorgesehen ist, die um eine durch den Schwenkpunkt (12) gehende Achse herum um 90° gegeneinander winkelversetzt angeordnet sind,
(b) die Polschuhe (32,34;36,38;40,42;44;46) jedes Paares zwischen sich einen Luftspalt (48) bilden, der von sphärischen Flächen begrenzt ist und die sphärischen Flächen im wesentlichen um den Schwenkpunkt (12) herum gekrümmt sind,
(c) Dauermagneten (24) vorgesehen sind, die mit den Polschuhen (32,34;36,38;40,42;44;46) und einem magnetischen Rückschluß einen magnetischen Kreis bilden, wobei in dem Luftspalt (48) ein radiales magnetisches Feld erzeugt wird,
(d) mit der Plattform (10) ein Anker verbunden ist mit vier um 90° gegeneinander versetzten, bogenförmigen Spulen (50,52,54,56) mit in Umfangsrichtung laufenden Windungen,
**dadurch gekennzeichnet, daß**
(e) die Spulen (50,52,54,56) langgestreckt sind, und
(f) jede dieser Spulen (50,52,54,56) mit einem bogenförmigen Spulenabschnitt (60) in den Luftspalt (48) jeweils eines der Paare von Polschuhen (32,34;36,38;40,42;44;46) eingreift.

2. Drehmomenterzeuger-Anordnung nach Anspruch 1, **dadurch gekennzeichnet, daß**
(a) jede der Spulen (50,52,54,56) einen bogenförmigen Innenabschnitt (58), einen bogenförmigen Außenabschnitt (60) und im wesentlichen radiale, kürzer als die Innen- und Außenabschnitte (58, 60) ausgebildete Endabschnitte (62,64) zwischen Innenabschnitt (58) und Außenabschnitt (60) aufweist, und
(b) die Außenabschnitte (60) in den Luftspalten (48) zwischen den Paaren von Polschuhen (32,34;36,38;40,42;44;46) geführt sind.

3. Drehmomenterzeuger-Anordnung nach Anspruch 2, **dadurch gekennzeichnet, daß** der Außenabschnitt (60) der Spulen (50,52,54,56) von sphärischen Flächen begrenzt ist.

4. Drehmomenterzeuger-Anordnung nach Anspruch 3, **dadurch gekennzeichnet, daß**
(a) an einem rohrförmigen Mittelteil (16) aus magnetisierbarem Material an dessen der Plattform (10) abgewandten Ende radiale Flanschteile (18) und an den Flanschteilen (18) im wesentlichen tangential zu dem Schwenkpunkt (12) sich erstreckende Magnetträger (20) mit planen Auflageflächen angeformt sind,
(b) plattenförmige Dauermagneten (24) mit ihrer Unterseite auf den Magnetträgern (20) sitzen und senkrecht zu der Auflagefläche der Magnetträger (20) magnetisiert sind,
(c) die äußeren Polschuhe (32,40,36,44) jedes Paares jeweils auf der Oberseite eines der Dauermagnete (24) befestigt sind und
(d) die inneren Polschuhe (34,42,38,46) an den rohrförmigen Mittelteil (16) angeformt sind.

## Claims

1. Torquer assembly having two structure fixed torquers, which act about two mutually orthogonal axes and directly engage a platform (10) and are adapted to exert torques about two mutually orthogonal axes on a plattform (10) which is mounted for universally movement about a central swivelling point, wherein
(a) a stator (14) is provided having four pairs of pole pieces (32, 34; 36, 38; 40, 42; 44; 46) which are angularly spaced from each other by 90° about an axis passing through said swivelling point
(b) the pole pieces (32, 34; 36, 38; 40, 42; 44; 46) of each pair form an air gap (48) defined by spherical surfaces, and the spherical surfaces are substantially curved about said swivelling point (12)
(c) permanent magnets (24) are provided which, together with said pole pieces (32, 34; 36, 38; 40, 42; 44; 46) and a magnetic return path provide a magnetic circuit generating a radial magnetic field within said air gap (48),
(d) an armature (Anker?) is connected with said platform (10), said armature having four arcuate coils (50, 52, 54, 56) with circumferentially extending turns, said coils being mutually offset by 90°,
**characterized in that**
(e) the coils (50, 52, 54, 56) are elongated, and
(f) each of such coils (50, 52, 54, 56) has an arcuate coil section (60) extending into the air gap (48) of an associated one of said pairs of pole pieces (32, 34; 36, 38; 40, 42; 44; 46).

2. Torquer assembly according to claim 1, **characterized in that**
(a) each of said coils has an arcuate inner section (58), an arcuate outer section (60) and substantially radial, short end sections (62, 64) between inner section (58) and (60) being shorter than the inner and the outer sections (58, 60), and
(b) the outer sections (60) are guided in the air gaps (48) between the pairs of pole pieces (32, 34; 36, 38; 40, 42; 44; 46).

3. Torquer assembly according to claim 2, **characterized in that** the outer section (60) of the coils (50, 52, 54, 56) is limited by spherical surfaces.

4. Torquer assembly according to claim 3, **characterized in that**
(a) at a tubular central part (16) of magnetizable material is provided having a first end near said platform and a second end remote from said platform, said central part having radial flange elements (18) at said remote end, said flange elements having integral magnet carriers (20) with plane support surfaces substantially tangential with respect to said swivelling point (12),
(b) flat-parallelepiped al permanent magnets are arranged with their lower surface on the magnet carriers (20) and are magnetized perpendicular to the support surfaces of the magnet carriers (20),
(c) the outer pole pieces (32, 40, 36, 44) of each pair are attached to the respective upper surface of a permanent magnet (24) and
(d) the inner pole pieces (34, 42, 38, 46) is integral with the tubular central part (16).

## Revendications

1. Disposition de générateurs de couple de rotation présentant deux générateurs de couple de rotation fixes par rapport à la structure qui agissent sur deux axes perpendiculaires l'un à l'autre et qui mordent directement sur la plate-forme (10), et grâce auxquels des couples de rotation sont susceptibles d'être exercés sur une plate-forme (10), logée de façon susceptible de se déplacer de tous les côtés autour d'un point de pivotement central (12), autour de deux axes (28,30) perpendiculaires l'un à l'autre,
(a) un stator (14) muni de quatre paires d'épanouissements polaires (32,34;36,38;40,42;44,46) étant prévu, épanouissements étant décalés les uns par rapport aux autres d'un angle de 90° autour d'un axe traversant le point de pivotement (12),
(b) les épanouissements polaires (32,34;36,38;40,42;44,46) de chaque paire formant entre eux un entrefer (48) limité par des surfaces sphériques et les surfaces sphériques étant cintrées essentiellement autour du point de pivotement (12),
(c) des aimants permanents (24) étant prévus, aimants formant un circuit magnétique avec les épanouissements polaires (32,34;36,38;40,42;44,46) et un blindage magnétique, un champ magnétique radial étant généré dans l'entrefer (48),
(d) un induit muni de quatre bobines (50,52,54,56) cintrées, décalées les unes des autres de 90° et munies de spires s'étendant dans le sens circonférentiel étant relié à la plate-forme (10),
**caractérisée par le fait que**
(e) les bobines (50,52,54,56) sont des bobines allongées, et
(f) chacune de ces bobines (50,52,54,56) mord avec une section de bobine (60) cintrée dans l'entrefer (48) de chaque fois l'une des paires d'épanouissements polaires (32,34;36,38;40,42;44,46).

2. Disposition de générateurs de couple de rotation selon la revendication 1, **caractérisée par le fait que**
(a) chacune des bobines (50,52,54,56) présente une section intérieure cintrée (58), une section extérieure cintrée (60) et des sections terminales (62,65) essentiellement radiales, situées entre la section intérieure (58) et la section extérieure (60) et étant plus petites que les sections intérieures et extérieures (58,60), et
(b) les sections extérieures (60) sont guidées dans les entrefers (48) entre les paires d'épanouissements polaires (32,34;36,38;40,42;44,46).

3. Disposition de générateurs de couple de rotation selon la revendication 2, **caractérisée par le fait que la** section extérieure (60) des bobines (50,52,54,56) est délimitée par des surfaces sphériques.

4. Disposition de générateurs de couple de rotation selon la revendication 3, **caractérisée par le fait que**
(a) des éléments de bride radiaux (18) sont formés à l'extrémité opposée à la plate-forme (10) d'un élément médian tubulaire (16) composé d'un matériau magnétisable et des supports d'aimant (20) munis de surfaces d'appui planes et s'étirant essentiellement dans la tangente du point de pivotement (12) sont formés sur les éléments de bride (18),
(b) des aimants permanents (24) en forme de plaque reposent, avec leur face inférieure, sur les supports d'aimant (20) et sont magnétisés perpendiculairement par rapport à la surface d'appui des supports d'aimant (20),
(c) les épanouissements polaires extérieurs (32,40,36,44) de chaque paire sont à chaque fois fixés sur la face supérieure de l'un des aimants permanents (24), et
(d) les épanouissements polaires intérieurs (34,42,38,46) sont formés sur l'élément médian tubulaire (16).
